# EUROPÄISCHE PATENTSCHRIFT

(11) **EP 1 179 152 B1**
(45) Veröffentlichungstag und Bekanntmachung des Hinweises auf die Patenterteilung: **23.07.2003**
(21) Anmeldenummer: 00943568.6
(22) Anmeldetag: 08.05.2000
(51) Int. Cl.: F16K 31/06

(54) **VERFAHREN ZUR HERSTELLUNG EINES ELEKTROMAGNETISCHEN VENTILS**
METHOD FOR PRODUCING AN ELECTROMAGNETIC VALVE
PROCEDE DE FABRICATION D'UNE VANNE ELECTROMAGNETIQUE

(30) Priorität: 17.05.1999 DE 19922466
(43) Veröffentlichungstag der Anmeldung: 13.02.2002
(73) Patentinhaber: SCHROTT, Harald, 88131 Lindau (DE)
(72) Erfinder: OTT, Hubert, D-88212 Ravensburg (DE)
(74) Vertreter: Patentanwälte Eisele, Otten & Roth
(86) Internationale Anmeldenummer: DE0001437
(87) Internationale Veröffentlichungsnummer: WO00070249

(56) Entgegenhaltungen:
- DE-A- 2 403 523
- DE-A- 3 718 490
- FR-A- 2 560 956
- GB-A- 1 390 334

## Beschreibung

Die Erfindung betrifft ein Verfahren zur Herstellung eines elektromagnetischen Ventils nach dem Oberbegriff des Ansprüchs 1.

In der Druckschrift DE 24 0 35 23 ist ein elektromagnetisches Ventil offenbart, bei dem ein stirnseitig in ein Ventilgehäuse eingefügter Ansatz verlötet wird.

Insbesondere für den Eineatz in Kühlmittelkreisläufen von Kühlgeräten, wie Kühlschränken, Kühltruhen oder dergleichen werden bei elektromagnetischen Ventilen hohe Anforderungen an die Dichtigkeit und Dauerstabilität gestellt. Zugleich soll ein derartiges Ventil jedoch mit wenig Aufwand herzustellen sein, um eine kostengünstige Fertigung in großer Stückzahl zu ermöglichen.

Ein Ventil, das zur Verwendung in einem Kühlmittelkreislauf geeignet ist, wurde beispielsweise in der DE 37 184 90 beschrieben. Dieses Ventil weist ein Ventilgehäuse auf, in dem ein Ventilkörper in einer Ventilkammer verschiebbar angeordnet ist. Ein Ventilsitz ist in einem Polschuh ausgebildet, der weiterhin eine Leitung zur Verbindung der Ventilkammer mit einem am Gehäuse angebrachten Anschlußrohr aufweist. Ein Problem bei derartigen Ventilen bildet nach wie vor die dichte und dauerhaft stabile Verbindung eines Anschlußrohres mit der Ventilkammer bzw. dem Ventilgehäuse.

Aufgabe der Erfindung ist es daher, ein Ventil und ein Herstellungsverfahren für dieses Ventil vorzuschlagen, daß eine kostengünstige Fertigung in großer Stückzahl bei dauerhaft stabiler und dichter Ausführung ermöglicht.

Diese Aufgabe wird durch die Merkmale des Anspruchs 1 bzw. des Anspruchs 14 gelöst.

Durch die in den Unteransprüchen genannten Maßnahmen sind vorteilhafte Ausführungen und Weiterbildungen der Erfindung möglich.

Dementsprechend zeichnet sich ein erfindungsgemäßes Verfahren zur Herstellung eines elektromagnetischen Ventils dadurch aus, daß das Anschlußrohr mit einem rohrförmigen Ventilgehäuse und zugleich mit einem in das Ventilgehäuse eingesetzten Polschuh verlötet wird.

Die Verlötung des Anschlußrohres mit dem Gehäuse sorgt bereits für einen dichten und stabilen Abschluß des Ventils, so daß an und für sich bereits durch diese Maßnahme eine Leckage des Fluidkreislaufs, z. B. des Kühlmittelkreislaufs nach Außen an die Umgebung ausgeschlossen ist. Durch das zusätzliche Verlöten mit dem Polschuh, der die entsprechende Verbindungsleitung zwischen dem Anschlußrohr und der Ventilkammer aufweist, ergibt sich eine zusätzliche Abdichtung nach Innen, so daß als Leckagestelle für den Fluidkreislauf nur der jeweilige Ventilsitz verbleibt. Gleichzeitig wird die mechanische Stabilität verbessert.

In einer Weiterbildung der Erfindung wird außerdem eine Verlötung des Polschuhs mit dem Ventilgehäuse vorgesehen.

Diese Maßnahme, die zusätzlich zu anderen Dichtmaßnahmen zwischen Polschuh und Ventilgehäuse, beispielsweise einer Verpressung dee Polschuhs im Ventilgehäuse durchgeführt werden kann, wird die Dichtigkeit des Ventile weiter verbessert. Durch die Verlötung des Anschlußrohrs am Ventilgehäuse und am Polschuh sowie des Polschuhs am Ventilgehäuse ist sicher gewährleistet, daß keinerlei Kühlflüssigkeit in den Außenbereich des Ventils gelangen kann. Durch die mehrfachen Verlötungen an dieser Stelle ist gewissermaßen eine mehrfache Sicherung gegen etwaige Leckstellen eingebaut. Jede der genannten Lötstellen verbessert die mechanische Stabilität des Ventils insgesamt und insbesondere der Befestigung des Anschlußrohres im Ventilgehäuse.

In einer vorteilhaften Ausführungsform der Erfindung werden die beschriebenen Lötvorgänge in einem Arbeitsgang durchgeführt. Hierdurch wird der Fertigungsaufwand und somit auch die damit verbundenen Kosten erheblich reduziert.

Vorteilhafterweise wird der Wärmeeintrag für die Verlötung durch elektromagnetische Induktion vorgenommen. Hierdurch ist eine lokal sehr eingeschränkte Erwärmung möglich, so daß vorherige Materialbearbeitungen unbeeinträchtigt bleiben. Insbesondere bleibt ein gehärteter Ventilsitz an dem der Lotstelle gegenüberliegenden Ende des Polschuhs kalt, so daß die Randschichthärtung des Ventilsitzes erhalten bleibt.

Zur Schonung von nicht zu verlötenden Ventilbereichen kann eine zusätzliche Kühlung beispielsweise über eine Kühlzange vorgesehen werden.

In einer besonders vorteilhaften Ausführungsform wird ein Lotring zum Einbringen des Lots an die Lotstelle verwendet. Dieser Lotring wird zwischen den Polschuh und das Anschlußrohr in die Gehäusebohrung vor dem Einfügen des Anschlußrohrs eingelegt. Die Verwendung eines solchen Lotrings sorgt zum einen für eine gleichmäßige Lotverteilung mit guter Lotdosierung. Somit ist eine umfangseitig gleichmäßige gute Qualität der Lötstelle gewährleistet.

Zum anderen kann hierdurch eine Qualitäts-sichtkontrolle der Verlötung durchgeführt werden. Beim vollständigen Aufschmelzen des Lotrings taucht das Anschlußrohr um den vorher vom Lot eingenommenen Abstand in die Gehäusebohrung ein. Durch dieses Eintauchen des Anschlußrohres in das Gehäuse ist mittels einfacher Sichtkontrolle eine Qualitätsprüfung möglich.

Vorzugsweise wird für das Ventilgehäuse und das Anschlußrohr ein Material mit im wesentlichen gleichen Wärmeausdehnungskoeffizienten und/oder im wesentlichen gleichen Wärmekapazitäten verwendet. Durch gleiche Wärmeausdehnungskoeffizienten werden Spannungen innerhalb der Lötstelle vermieden, durch möglichst gleiche Wärmekapazitäten wird eine gleichmäßige Erwärmung der gesamten Lötstelle gefördert.

Bevorzugt wird daher das gleiche Material sowohl für das Ventilgehäuse als auch für das Anschlußrohr vorgesehen, wobei sich hierbei der Einsatz von Kupfer bewährt hat, der sich bei hoher Dichtigkeit gut verarbeiten läßt. Der Polschuh kann hierbei aus Eisen gefertigt werden, so daß die gewünschten magnetischen Eigenschaften gegeben sind.

In einem besonders vorteilhaften Ausführungsbeispiel der Erfindung wird das Anschlußrohr vorgebogen und anschließend eingesetzt. Durch das Vorbiegen des Anschlußrohres wird eine nachträgliche mechanische Belastung, die durch das Biegen des Anschlußrohres auftreten könnte, vermieden. Die Biegung des Anschlußrohres kann hierbei je nach Kundenwunsch mit unterschiedlichen Winkeln oder Rohrverläufen vorgenommen werden.

In einer besonderen Ausführungsform der Erfindung werden zwei Anschlußrohre mit zwei Gehäusebohrungen und mit zwei Polschuhen verlötet. Dies betrifft vor allem die Fertigung eines bistabilen elektromagnetischen Ventils, bei dem eine in die Ventilkammer mündende Leitung zwischen zwei Anschlußleitungen bistabil hin und her geschaltet werden kann.

Die genannten Lötvorgänge werden vorzugsweise unter Schutzgasatmosphäre vorgenommen. Generell wird durch die Schutzgasatmosphäre die Verwendung eines Flußmittels entbehrlich. Hierdurch wird vermieden, daß Flußmittelrückstände innerhalb des Ventils verbleiben. Die Reinheit des Fluidraumes ist von wesentlicher Bedeutung, beispielsweise für Kühlmittelventile. Weiterhin wird hierdurch die Qualität der Lötfuge hinsichtlich der Dichtheit verbessert, da ohne Flußraittelrückstände diese auch keine Poren bilden können.

Die vorgenannten Lötvorgänge können mit Weich- und/oder Hartlot durchgeführt werden. Die Verwendung von Hartlot hat jedoch hierbei einen besonderen Vorteil, daß sich an den Verbindungsstellen der verlöteten Teile eine sehr hohe mechanische Festigkeit erreichen läßt. Durch die hohe mechanische Festigkeit wird die Dichtigkeit auch bei mechanischer Beanspruchung mit hoher Lebensdauer gewährleisten.

Ein Ausführungsbeispiel der Erfindung ist in der Zeichnung dargestellt und wird anhand der Figuren nachfolgend näher erläutert.

Im einzelnen zeigen
- Fig. 1: einen Längsschnitt durch ein erfindungsgemäß herstellbares Ventil und
- Fig. 2: eine Ausschnittsvergrößerung einer erfindungsgemäßen Lötstelle in vergrößerter Schnittdarstellung.

Das Ventil 1 umfaßt ein rohrförmiges Ventilgehäuse 2 in dem durch zwei Polschuhe 3, 4 eine Ventilkammer 5 begrenzt ist. In der Ventilkammer 5 ist ein Ventilkörper 6 verschiebbar gelagert, wobei er mit zwei kugelförmigen Dichtelementen 7, 8 jeweils auf einem in den Polschuhen 3, 4 angebrachten Ventilsitz 9, 10 anschlägt.

Die Polschuhe 3, 4 weisen Verbindungsleitungen 11, 12 zu zwei Anschlußrohren 13, 14 auf, die bis zum Anschlag an den Polschuhen 3, 4 in entsprechende Bohrungen 15, 16 des Ventilgehäuses 2 eingeschoben sind.

Das vorliegende Ventil 1 dient zum Umschalten der Verbindung einer quer in die Ventilkammer 5 mündenden Leitung 17 zwischen den beiden Anschlußrohren 13, 14. Über nicht näher dargestellte Permanentmagnete ergibt sich hierbei ein in jeder Endlage des Ventilkörpers 6 bistabiles und durch eine ebenfalls nicht näher dargestellte elektromagnetische Spule betätigbares Ventil.

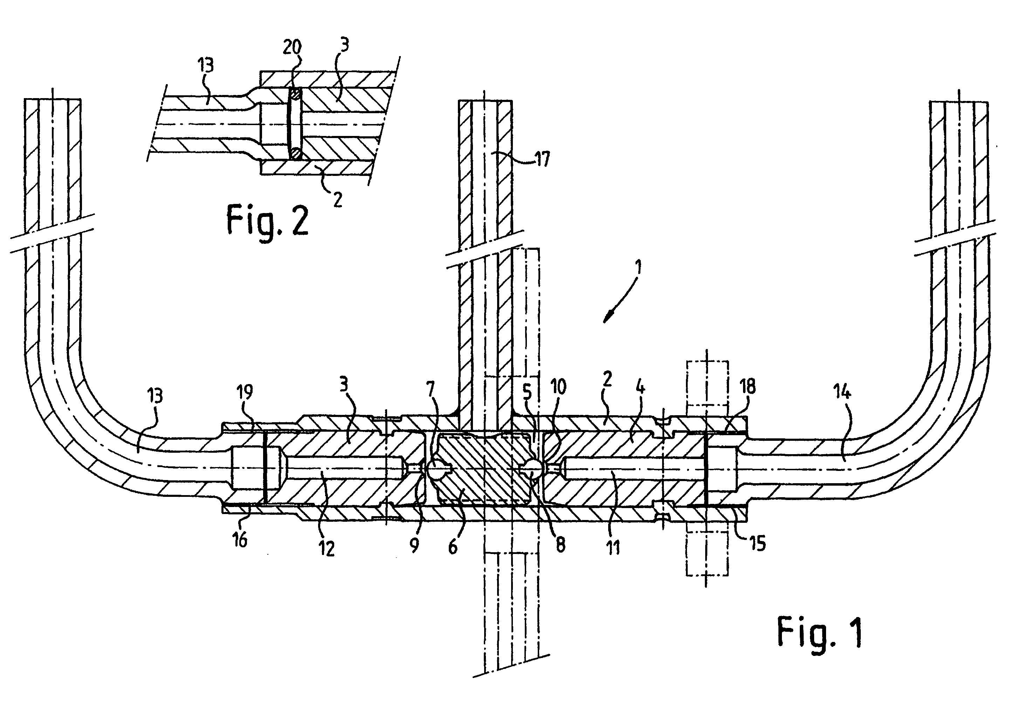

Fig. 1 zeigt den fertig verlöteten Zustand, bei dem die Anschlußrohre 13, 14 an die Polschuhe 3, 4 angefügt sind, wobei stirnseitig die Anschlußrohre 13, 14 mit den Polschuhen 3, 4 ebenso verlötet sind, wie umfangseitig mit den Gehäusebohrungen 15, 16. Auch die Polschuhe 3, 4 sind umfangseitig mit dem Ventilgehäuse 2 verlötet. Die durchgehende Verlötung ist durch eine entsprechende Lotverteilung 18, 19 mit dickeren Linien dargestellt.

In Fig. 2 ist der Zustand vor dem Verlöten veranschaulicht. Ein Lotring 20 ist hierbei zwischen dem Polschuh 3 und dem Anschlußrohr 13 eingelegt. Das Anschlußrohr 13 ist demnach um die Dicke des Lotrings 20 vom Polschuh 3 beabstandet und dementsprechend noch nicht soweit in das Ventilgehäuse 2 eingeschoben, wie in der Darstellung gemäß Fig. 1. Durch Erwärmen, beispielsweise über elektromagnetische Induktion wird das Lot des Lotrings 20 aufgeschmolzen, so daß das Anschlußrohr 13 an den Polschuh 3 anzufügen ist. In entsprechender vertikaler Orientierung fällt das Anschlußrohr 13 während des Aufschmelzens selbsttätig auf den Polschuh 3. Durch die Verschiebung des Anschlußrohres 13 beim Anfügen an den Polschuh kann eine Sichtkontrolle bezüglich einer gleichmäßigen Aufschmelzung des Lots 20 erfolgen.

Das Lot des Lotrings 20 verteilt sich zugleich stirnseitig in dem Kapillarspalt zwischen dem Anschlußrohr 13 und dem Polschuh 3 und umfangseitig zwischen dem Anschlußrohr 13 und dem Gehäuse 2 sowie dem Polschuh 3 und dem Ventilgehäuse 2.

Durch das beschriebene Verfahren werden mehrere Dichtstellen zugleich herstellt. Zunächst einmal ist das Ventilgehäuse 2 mit den Anschlußrohren 13, 14 nach außen hin umfangseitig abgedichtet. Weiterhin sind die Verbindungsleitungen 11, 12 zusätzlich durch die stirnseitige Verlötung zwischen den Polschuhen 3, 4 und den Anschlußrohren 13, 14 abgedichtet.

Zu guter letzt wird die Außendichtigkeit der Polschuhe 3, 4, die bereits durch andere Maßnahmen, beispielsweise Verpressen oder Einrollen hergestellt wird, durch die umfangseitige Verlötung im Bereich der Lötstelle nochmals verbessert.

Somit sind mehrere Dichtstellen auf jedem Weg vorhanden, den ein in der Ventilkammer 5 befindliches Fluid, beispielsweise eine Kühlflüssigkeit, nach außen nehmen könnte, wodurch die Dichtigkeit des Ventils mehrfach abgesichert ist.

Mit den bis zu drei verschiedenen Lötstellen in einem Arbeitsgang wird zudem die mechanische Stabilität des Ventils 1 insgesamt sowie insbesondere der Befestigung der Anschlußrohre 13, 14 erheblich verbessert.

Die Ventilsitze 9, 10 können durch entsprechende Kühlmittel während des Wärmeeintrags, beispielsweise durch eine Kühlzange vor einer übermäßigen Erwärmung geschützt werden, so daß eine dort zuvor angebrachte Randschichthärtung oder sonstige Materialbearbeitung von dem Lötvorgang unbeeinträchtigt bleibt.

### Bezugszeichenliste:

- 1: Ventil
- 2: Ventilgehäuse
- 3: Polschuh
- 4: Polschuh
- 5: Ventilkammer
- 6: Ventikörper
- 9: Ventilsitz
- 10: Ventilsitz
- 11: Verbindungsleitung
- 12: Verbindungsleitung
- 13: Anschlußrohr
- 14: Anschlußrohr
- 15: Bohrung
- 16: Bohrung
- 17: Leitung
- 18: Lotverteilung
- 19: Lotverteilung
- 20: Lotring

## Patentansprüche

1. Verfahren zur Herstellung eines elektromagnetischen Ventils, insbesondere für einen Kühlmittelkreislauf, mit einem wenigstens teilweise metallenen rohrförmigen Ventilgehäuse (2), in dem ein Ventilkörper (6) in einer Ventilkammer (5) verschiebbar angeordnet wird, wobei ein Ventilsitz (9,10) in einem wenigstens teilweise metallenen Polschuh (3,4) ausgebildet wird, der in das Ventilgehäuse (2) eingesetzt wird und durch den eine Verbindungsleitung zu einem in eine Gehäusebohrung eingesteckten, wenigstens teilweise metallenen Anschlußrohr (13,14) führt, **dadurch gekennzeichnet, daß** das Anschlußrohr (13, 14) umfangsseitig mit dem Ventilgehäuse (2) und stirnseitig mit dem Polschuh (3, 4) mit einer durchgehenden Lotverteilung verlötet wird.

2. Verfahren nach Anspruch 1, **dadurch gekennzeichnet, daß** der Polschuh (3, 4) umfangseitig mit dem Ventilgehäuse (2) verlötet wird.

3. Verfahren nach einem der vorgenannten Ansprüche, **dadurch gekennzeichnet, daß** wenigstens zwei der genannten Lötvorgänge in einem Arbeitsgang durchgeführt werden.

4. Verfahren nach einem der vorgenannten Ansprüche, **dadurch gekennzeichnet, daß** der Wärmeeintrag zum Verlöten durch elektromagnetische Induktion vorgenommen wird.

5. verfahren nach einem der vorgenannten Ansprüche, **dadurch gekennzeichnet, daß** eine Kühlvorrichtung zur lokalen Begrenzung des Wärmeeintrags verwendet wird.

6. Verfahren nach einem der vorgenannten Ansprüche, **dadurch gekennzeichnet, daß** das Lot als Lotring (20) zwischen den Polschuh (3, 4) und das Anschlußrohr (13, 14) in das Gehäuse (2) eingelegt wird.

7. Verfahren nach einem der vorgenannten Ansprüche, **dadurch gekennzeichnet, daß** für das Ventilgehäuse (2) und das Anschlußrohr (13, 14) Materialien mit im Wesentlichen gleichem Wärmeausdehnungskoeffizient und/oder im Wesentlichen gleicher Wärmekapazität verwendet wird.

8. Verfahren nach einem der vorgenannten Ansprüche, **dadurch gekennzeichnet, daß** für das Ventilgehäuse (2) und das Anschlußrohr (13, 14) das gleiche Material verwendet wird.

9. Verfahren nach einem der vorgenannten Ansprüche, **dadurch gekennzeichnet, daß** für das Ventilgehäuse (2) und das Anschlußrohr (13, 14) Kupfer verwendet wird.

10. Verfahren nach einem der vorgenannten Ansprüche, **dadurch gekennzeichnet, daß** für die Herstellung des Polschuhs (3, 4) wenigstens teilweise Eisen verwendet wird.

11. Verfahren nach einem der vorgenannten Ansprüche, **dadurch gekennzeichnet, daß** das Anschlußrohr (13, 14) vorgebogen und anschließend eingesetzt und verlötet wird.

12. Verfahren nach einem der vorgenannten Ansprüche, **dadurch gekennzeichnet, daß** die Verlötung des Anscblußröhres unter Schutzgasatmosphäre ohne Flussmittel durchgeführt wird.

13. Verfahren nach einem der vorgenannten Ansprüche, **dadurch gekennzeichnet, daß** zwei Anschlußrohre (13, 14) beidseits der Ventilkammer (5) mit dem Gehäuse (2) mit zwei Polschuhen (3, 4) stirnseitig verlötet werden.

14. Bistabiles elektromagnetisches Ventil für den Einsatz in einem Kühlmittelkreislauf eines Kühlgerätes, insbesondere eines Kühlschranks oder einer Kühltruhe, mit einer im Innern eines rohrförmigen Ventilgehäuses (2) angeordneten Ventilkammer (5) und einem zwischen zwei Polschuhen (3, 4) verschiebbaren Ventilkörper (7), wobei in wenigstens einem Polschuh (3, 4), eine Verbindungsleitung (11, 12) zu einem Anschlußrohr (13, 14) vorgesehen ist, **dadurch gekennzeichnet, daß** das Anschlußrohr (13, 14) umfangsseitig mit dem Ventilgehäuse (2) und stirnseitig mit dem Polschuh (3, 4) mit einer durchgehenden Lotverteilung verlötet ist.

## Claims

1. Method for the manufacture of an electromagnetic valve, in particular for a coolant circuit with an at least partially metallic tubular valve housing (2), in which a valve body (6) is arranged movably in a valve chamber (5), a valve seat (9, 10) being formed in an at least partially metallic pole shoe (3, 4) which is inserted into the valve housing (2) and through which a connection line leads to an at least partially metallic connecting pipe (13, 14) which is inserted into an opening in the housing, **characterised in that** the connecting pipe (13, 14) is soldered to the valve housing (2) at the circumference and to the pole shoe (3, 4) at the front face with a continuous solder distribution.

2. Method according to claim 1 **characterised in that** the pole shoe (3, 4) is soldered to the valve housing at the circumference.

3. Method according to any of the preceding claims **characterised in that** at least two of said soldering processes are carried out in one operation.

4. Method according to any of the preceding claims **characterised in that** the application of heat for the soldering is carried out by electromagnetic induction.

5. Method according to any of the preceding claims **characterised in that** a cooling device is used for the local restriction of the application of heat.

6. Method according to any of the preceding claims **characterised in that** the solder is placed into the housing (2) between the pole shoe (3, 4) and the connecting pipe (13, 14), in the form of a solder ring.

7. Method according to any of the preceding claims **characterised in that** materials with a substantially equal coefficient of thermal expansion and/or a substantially equal thermal capacity are used for the valve housing (2) and the connecting pipe (13, 14).

8. Method according to any of the preceding claims **characterised in that** the same material is used for the valve housing (2) and the connecting pipe (13, 14)

9. Method according to any of the preceding claims **characterised in that** copper is used for the valve housing (2) and the connecting pipe (13, 14).

10. Method according to any of the preceding claims **characterised in that** iron is used at least in part for the manufacture of the pole shoe (3, 4).

11. Method according to any of the preceding claims **characterised in that** the connecting pipe (13, 14) is pre-bent and then inserted and soldered.

12. Method according to any of the preceding claims **characterised in that** the soldering of the connecting pipe is carried out in an inert gas atmosphere without soldering flux.

13. Method according to any of the preceding claims **characterised in that** two connecting pipes (13, 14) are soldered to the housing (2) with two pole shoes (3, 4) at the front face on either side of the valve chamber (5).

14. Bistable electromagnetic valve for use in a coolant circuit of a refrigerated appliance, in particular of a refrigerator or a freezer, with a valve chamber (5) arranged in the interior of a tubular valve housing (2) and a valve body (7) which is movable between two pole shoes (3, 4), a connection line (11, 12) leading to a connecting pipe (13, 14) being provided in at least one pole shoe (3, 4), **characterised in that** the connecting pipe (13, 14) is soldered at the circumference to the valve housing (2) and at the front face to the pole shoe (3, 4) with a continuous solder distribution.

## Revendications

1. Procédé pour fabriquer une valve électromagnétique, en particulier pour un circuit d'agent réfrigérant, comportant un boîtier de valve (2) tubulaire au moins partiellement métallique, dans lequel un corps de valve (6) est agencé de façon déplaçable dans une chambre de valve (5), un siège de valve (9, 10) étant réalisé dans une pièce polaire (3, 4) au moins partiellement métallique, qui est montée dans le boîtier de valve (2) et à travers laquelle un conduit de liaison mène à un tube de raccordement (13, 14) au moins partiellement métallique, monté dans un perçage du boîtier, **caractérisé en ce que** le tube de raccordement (13, 14) est brasé du côté périphérique avec le boîtier de valve (2) et du côté frontal avec la pièce polaire (3, 4) avec une distribution de métal d'apport de brasage continue.

2. Procédé selon la revendication 1,
**caractérisé en ce que** la pièce polaire (3, 4) est brasée du côté périphérique avec le boîtier de valve (2).

3. Procédé selon une des revendications précitées,
**caractérisé en ce qu'**au moins deux des processus de brasage cités sont effectués dans une étape de travail.

4. Procédé selon une des revendications précitées,
**caractérisé en ce que** l'amenée de chaleur pour le brasage est réalisée par induction électromagnétique.

5. Procédé selon une des revendications précitées,
**caractérisé en ce qu'**un dispositif de refroidissement est utilisé pour limiter localement l'amenée de chaleur.

6. Procédé selon une des revendications précitées,
**caractérisé en ce que** le métal d'apport de brasage est prévu comme bague de brasage (20) entre la pièce polaire (3, 4) et le tube de raccordement (13, 14) dans le boîtier (2).

7. Procédé selon une des revendications précitées,
**caractérisé en ce que**, pour le boîtier de valve (2) et le tube de raccordement (13, 14), on utilise des matières ayant généralement le même coefficient de dilatation thermique et/ou généralement la même capacité thermique.

8. Procédé selon une des revendications précitées,
**caractérisé en ce que**, pour le boîtier de valve (2) et le tube de raccordement (13, 14), on utilise la même matière.

9. Procédé selon une des revendications précitées,
**caractérisé en ce que**, pour le boîtier de valve (2) et le tube de raccordement (13, 14), on utilise du cuivre.

10. Procédé selon une des revendications précitées,
**caractérisé en ce que**, pour la fabrication de la pièce polaire (3, 4), on utilise au moins partiellement du fer.

11. Procédé selon une des revendications précitées,
**caractérisé en ce que** le tube de raccordement (13, 14) est préalablement cintré et, ensuite, mis en place et brasé.

12. Procédé selon une des revendications précitées,
**caractérisé en ce que** le tube de raccordement est brasé sous une atmosphère de gaz protecteur sans fondant.

13. Procédé selon une des revendications précitées,
**caractérisé en ce que** deux tubes de raccordement (13, 14) sont brasés de façon frontale des deux côtés de la chambre de valve (5) avec le boîtier (2) avec deux pièces polaires (3, 4).

14. Valve électromagnétique bistable pour l'utilisation dans un circuit d'agent réfrigérant d'un appareil réfrigérant, en particulier un réfrigérateur ou un congélateur, comportant une chambre de valve (5) agencée à l'intérieur d'un boîtier de valve tubulaire (2) et un corps de valve (7) déplaçable entre deux pièces polaires (3, 4), un conduit de liaison (11, 12) vers un tube de raccordement (13, 14) étant prévu dans au moins une pièce polaire (3, 4),
**caractérisée en ce que** le tube de raccordement (13, 14) est brasé du côté périphérique avec le boîtier de valve (2) et du côté frontal avec la pièce polaire (3, 4) avec une distribution de métal d'apport de brasage continue.
